# FASCICULE DE BREVET EUROPEEN

(11) **EP 0 651 941 B1**
(45) Date de publication et mention de la délivrance du brevet: **02.05.1997**
(21) Numéro de dépôt: 94470034.3
(22) Date de dépôt: 02.11.1994
(51) Int. Cl.: A01J 25/16

(54) **Procédé et dispositif de mise en place et/ou de retrait de fromages sur des claies, et leur application au retournement des fromages**
Verfahren und Vorrichtung zum Anbringen und/oder Zurückholen von Käse auf/von Horden, und deren Verwendung in Wenden von Käse
Process and device for installing and/or withdrawing cheeses on/from trays, and their use in turning cheeses

(30) Priorité: 05.11.1993 FR 9313405; 20.01.1994 FR 9400729
(43) Date de publication de la demande: 10.05.1995
(73) Titulaire: Hermann Waldner GmbH & Co., 88231 Wangen im Allgäu (DE)
(72) Inventeur: Thiriot, M. Cyril, F-57050 Metz (FR)
(74) Mandataire: Schmit, Christian Norbert Marie

(56) Documents cités:
- FR-A- 2 484 380
- FR-A- 2 538 218

## Description

La présente invention concerne un procédé et un dispositif de mise en place et/ou de retrait de fromages sur des claies, et leur application au retournement des fromages.

De manière générale, l'invention concerne le domaine de la fromagerie, et plus particulièrement les manipulations des fromages, notamment des fromages à pâte molle, tels que par exemple le camembert.

Classiquement, au cours de leur élaboration, les fromages sont disposés sur des claies en forme de grille rectangulaire plane comportant un ensemble de fils longitudinaux parallèles reliés par des fils transversaux, ménageant entre eux des jours qui permettent aux fromages d'être en contact avec l'atmosphère ambiante sur toute leur surface. Les claies comportent, dans les angles, des pieds qui permettent leur empilage, les pieds d'une claie s'emboîtant sur les pieds de la claie inférieure, en ménageant entre les grilles un espace suffisant pour que les fromages ne soient pas comprimés.

Il est évidemment nécessaire, à certains moments, de placer les fromages sur les claies ou de les enlever. Cela se fait classiquement manuellement. Pour faciliter l'enlèvement des fromages, compte-tenu que ceux-ci peuvent avoir tendance à adhérer sur la claie sur laquelle ils reposent, il est connu d'utiliser des plaques rainurées, en silicone, que l'on place sous la claie et que l'on pousse vers le haut pour décoller les fromages, les fils de la claie pénétrant dans les rainures de la plaque. Les fromages n'adhérant plus à la claie, ils peuvent alors être saisis manuellement sans efforts et donc sans risque de les détériorer. Mais il n'est pas possible à ce stade de déplacer l'ensemble des fromages par rapport à la claie, celle-ci étant bloquée dans les rainures de la plaque. Par exemple, il n'est pas possible de séparer l'ensemble des fromages de la claie pour les emporter vers une installation de conditionnement et d'emballage.

Ainsi, même en production industrielle, il n'est pas possible d'éviter des manipulations manuelles des fromages, ce qui est un problème tant sur le plan de la nécessité d'opérateurs chargés de ces manipulations, que sur le plan de l'hygiène et du risque d'abîmer les fromages, surtout ceux du type à pâte molle. De plus, il n'est pas possible d'enlever mécaniquement les fromages d'une claie faisant partie d'une pile de claies, sans désempiler celles-ci.

Un autre problème se pose lors du retournement des fromages, opération nécessaire au cours de l'élaboration. Classiquement, pour retourner les fromages déposés sur une claie, on place sur ceux-ci une seconde claie, à l'envers, et en maintenant les deux claies pressées l'une vers l'autre, on fait faire à l'ensemble un demi-tour, les fromages reposant alors sur la deuxième claie, on retire la première. Cette opération pose plusieurs problèmes :
- le retournement manuel implique des efforts importants pour l'opérateur, le poids des fromages ajouté à celui des claies pouvant atteindre de 7 à 11 kg, et les grandes dimensions des claies, de l'ordre de 1 m sur 60 cm, aggravent encore ce problème,
- les claies ne sont pas toujours parfaitement planes, et lors du retournement, les fromages peuvent glisser entre elles,
- le retournement ne peut se faire que claie par claie, et nécessite donc un dépilage et réempilage de celles-ci, ce problème étant aggravé par le fait que souvent les pieds des claies ne se réemboîtent pas facilement dans ceux de la claie inférieure.

Le document FR-A-2538218 décrit un système de retournement mécanisé de claies portant des fromages. Pendant le retournement de l'ensemble des deux claies entre lesquelles sont situés les fromages, ceux-ci sont maintenus par des coussins élastiques pressés contre les fromages à travers les claies. Ceci nécessite la manutention de deux claies, et aussi le dépilage et réempilage de celles-ci.

La présente invention a pour but de résoudre les différents problèmes exposés ci-dessus, et vise, comme premier objectif, à permettre la mise en place des fromages sur une claie, et leur retrait de celle-ci, sans intervention manuelle sur les fromages.

Avec ces objectifs en vue, l'invention a pour objet un procédé pour la mise en place de fromage sur une claie en forme de grille s'étendant dans un plan, ou leur retrait de celle-ci, caractérisé en ce qu'on soulève les fromages au moyen d'un support plan horizontal, muni d'une pluralité d'éléments escamotables s'étendant, dans une position érigée, vers le haut perpendiculairement ou obliquement par rapport au support, le support étant situé à un niveau en-dessous de la dite grille et les éléments escamotables s'étendant jusqu'à un niveau au-dessus de la grille, et on déplace le support parallèlement au dit plan, entre une position où le support est en-dessous de la grille et une position ou le support est à côté de celle-ci, les éléments escamotables se rabattant momentanément vers le support lorsqu'ils sont amenés lors du déplacement au contact de la grille, et reprenant leur position érigée lors de la perte de contact, et les fromages étant soutenus en permanence et entraînés par les éléments escamotables érigés.

L'invention a aussi pour objet un dispositif pour la mise en place et/ou le retrait de fromages sur une claie en forme de grille s'étendant dans un plan, comportant des moyens pour supporter les fromages en passant dans les jours de la dite grille, caractérisé en ce que les dits moyens comportent un support plan muni d'une pluralité d'éléments escamotables s'étendant, dans une position érigée dans laquelle ils sont rappelés élastiquement, perpendiculairement ou obliquement par rapport au support, les dits éléments escamotables pouvant se rabattre vers le support lorsqu'ils sont amenés, lors d'un déplacement des supports parallèlement à la grille, au contact d'éléments de celle-ci, s'étendant transversalement à la direction du déplacement.

Grâce à l'invention, il est possible de mettre en place sur une claie un groupe de fromages, ou inversement de retirer ces fromages de la claie, en une seule opération et sans intervention manuelle.

L'invention a aussi pour objectif de faciliter le retournement des fromages et de rendre cette opération possible sans intervention manuelle sur les fromages ou sur les claies.

A cette fin, l'invention a aussi pour objet une application du procédé défini ci-dessus au retournement de fromages, caractérisée en ce qu'on utilise un premier support tel que prédéfini pour retirer les fromages de la claie, on utilise un deuxième support, en position inversée par rapport au premier support et positionable en regard du premier support pour pouvoir enserrer les fromages entre les deux supports, lorsque ceux-ci sont dégagés latéralement de la claie, on fait faire un demi-tour à l'ensemble des deux supports, et on réinsère les fromages sur la claie par un déplacement du deuxième support, en sens inverse du retrait.

L'invention a encore pour objet une machine de retournement de fromages disposés sur des claies, caractérisée en ce qu'elle comporte au moins un ensemble de deux supports tels que définis ci-dessus, et disposés en sens inverse l'un de l'autre, des moyens pour amener les éléments escamotables des supports en contact avec les fromages et soulever ceux-ci de la claie, des moyens de déplacement des supports parallèlement à la claie entre une position engagée où les supports sont en regard de la claie et une position dégagée où les supports sont à côté de la claie, et des moyens pour faire tourner le dit ensemble d'un demi-tour, lorsqu'il est dans la dite position dégagée.

D'autres caractéristiques et avantages apparaîtront dans la description qui va être faite à titre d'exemple d'un procédé et dispositif de retournement de fromages conformes à l'invention.

On se reportera aux dessins annexés dans lesquels :
- la figure 1 est une vue de dessus d'une claie,
- les figures 2 à 10 représentent les phases successives du retournement des fromages déposés sur une claie,
- les figures 11 à 22 représentent les phases successives de retournement des fromages de toute une pile de claies,
- la figure 23 illustre la déformation des éléments escamotables lors du retrait des fromages de la claie, dans le cas d'éléments flexibles,
- la figure 24 est similaire à la figure 23, dans le cas d'éléments articulés,
- la figure 25 montre une variante de disposition des éléments escamotables de deux supports destinés à saisir les fromages d'une claie pour leur retournement,
- la figure 26 est une vue schématique d'une machine de retournement des fromages d'une pile de claies,
- la figure 27 est une vue suivant la flèche F de la figure 26 montrant le dispositif de retournement,
- la figure 28 est une vue schématique partielle à plus grande échelle des moyens de déplacement vertical des claies et des supports.

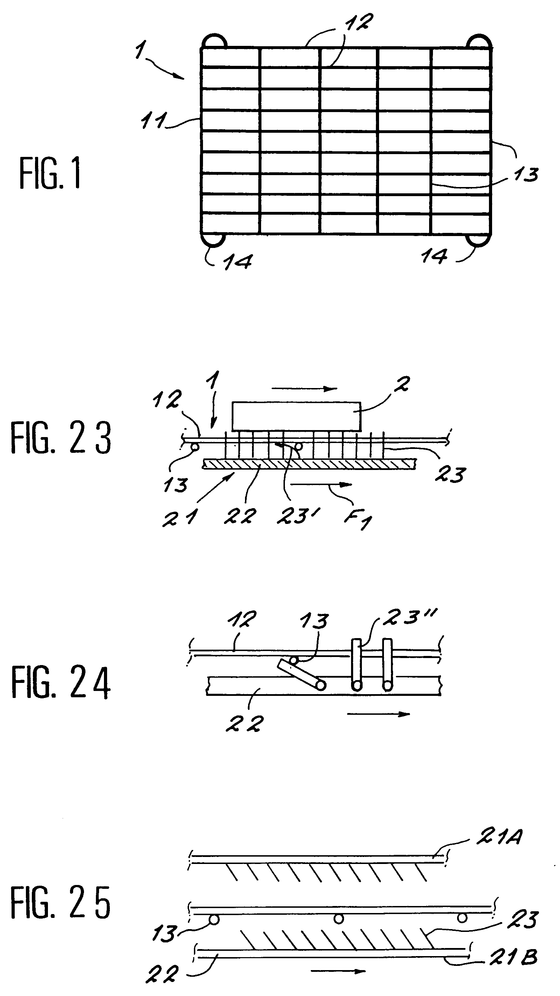

Le dessin de la figure 1 représente une claie 1 de type connu, classiquement utilisée pour supporter des fromages 2. La claie 1 est formée d'une grille plane 11 comportant plusieurs fils longitudinaux parallèles 12 reliés par des fils transversaux 13 et munie de pieds 14. Les pieds sont classiquement agencés de manière à s'emboîter dans les pieds d'une seconde claie placée en dessous, pour assurer leur positionnement relatif, et permettre leur empilage tout en respectant un espacement suffisant entre les grilles pour y placer les fromages.

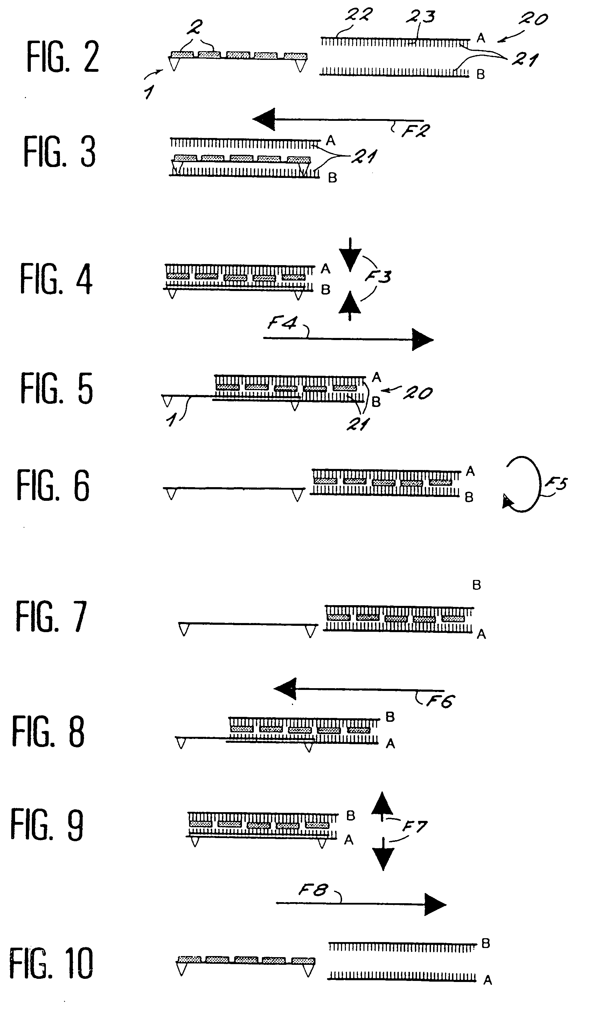

Sur le dessin de la figure 2, on a représenté en vue frontale la claie 1 supportant des fromages 2 à retourner, et des moyens de support des fromages constitués par un ensemble 20 de deux tapis 21. Chaque tapis est formé d'un support plan 22 dont les poils 23 flexibles constituent des éléments escamotables lorsque, comme on le comprendra mieux par la suite, on exerce sur ceux-ci un effort dirigé parallèlement au plan du support.

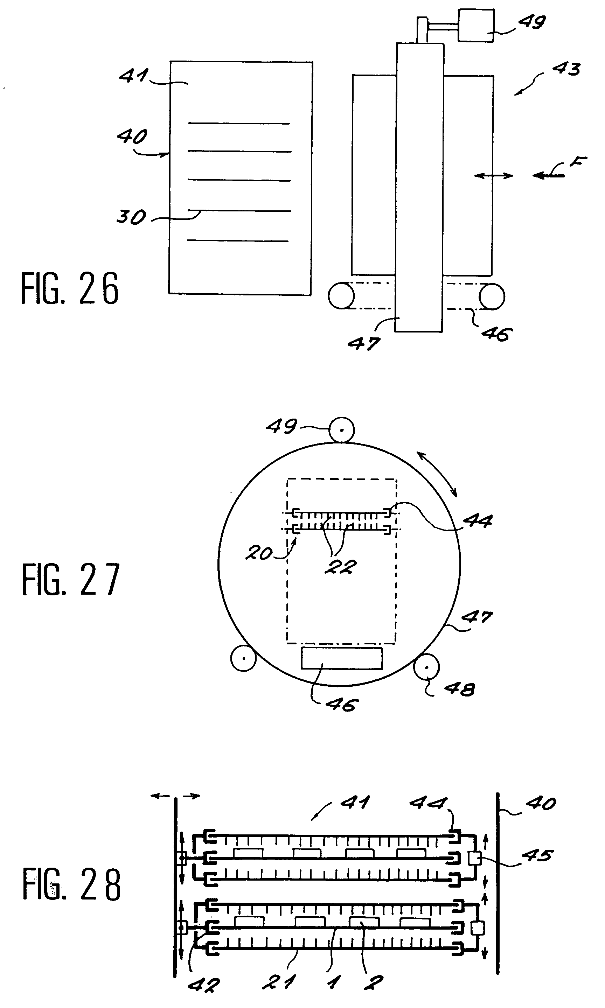

Comme on le voit sur la figure 23, lorsque le tapis 21 est placé sous la claie 1 et soulevé, les poils 23 passent entre les fils 12, 13 de la claie et soulèvent les fromages 2 en décollant ceux-ci de la grille. Lorsque l'on déplace alors le tapis 21 parallèlement à la grille 11 selon la flèche F1, les poils 23 qui s'étendent verticalement entraînent dans leur déplacement les fromages 2. Lorsque certains de ces poils, tel que 23', sont amenés au contact des fils transversaux 13, ils se rabattent élastiquement vers le support 22, ce qui permet au tapis de poursuivre son mouvement, en entraînant les fromages supportés par les autres poils 23 qui restent érigés. Lorsque, en poursuivant le mouvement, les poils 23 se trouvent libérés du contact avec les fils transversaux 13, ils reviennent élastiquement dans leur position érigée verticale et participent ainsi à nouveau au soutien des fromages.

Il est ainsi possible de déplacer sans difficulté les fromages par rapport à la grille, ceux-ci suivant le mouvement du tapis.

Dans ce cas, les éléments escamotables formés par les poils 23 sont liés rigidement par leur base au support 22, et sont flexibles en eux-même. Préférentiellement, ils sont réalisés en un matériau de type téflon. Leur section peut être ronde, ou de forme allongée dans la direction perpendiculaire au déplacement, les poils ayant alors la forme de lamelles flexibles.

Comme représenté à la figure 24, les éléments escamotables peuvent aussi être des éléments rigides ou semi rigides 23'', articulés en rotation sur le support 22 et rappelés élastiquement dans leur position d'extension verticale.

La longueur des éléments escamotables 23, 23'', poils ou autres, est déterminée de manière que, lorsque le support 22 est poussé vers le haut, par en-dessous de la grille, leurs extrémités supérieures dépassent suffisamment au-dessus de cette dernière pour soulever les fromages et éviter tout contact de ceux-ci avec la claie lors du déplacement. Le nombre d'éléments escamotables par unité de surface du support est suffisamment grand pour que la pression ponctuelle que chacun exerce sur les fromages soit suffisamment faible pour ne pas marquer la surface des fromages.

Grâce à la possibilité qu'ont les éléments escamotables de se rabattre vers le support lorsqu'ils rencontrent, lors du déplacement du support, des obstacles tels que les fils transversaux de la claie, et de se redresser ensuite pour supporter les fromages, il est ainsi possible de retirer en une seule opération tous les fromages d'une claie, ou inversement de les mettre en place sur celle-ci. Il est a noter que la mise en oeuvre d'un seul support tel que décrit ci-dessus est suffisante pour assurer la manutention des fromages d'une claie. Il est par exemple possible d'assurer ainsi le retrait des fromages d'une claie, puis leur transport à un autre endroit pour les remettre en place sur une autre claie ou sur tout autre dispositif présentant des jours à travers lesquels les éléments escamotables peuvent s'ériger, par exemple un transporteur à bande ajourée ou similaire.

Le dispositif et le procédé décrit ci-dessus trouvent cependant une application particulièrement intéressante pour le retournement des fromages, ainsi que cela va être décrit.

Les dessins des figures 2 à 10 représentent les différentes phases d'une opération de retournement des fromages sur une seule claie, en utilisant des tapis tels que décrits précédemment.

On utilise à cette fin deux tapis 21 identiques disposés en regard l'un de l'autre, repérés par les lettres A et B. Le tapis 21 A est situé à un niveau au-dessus de la claie 1 avec ses poils dirigés vers le bas, et le tapis 21B est à un niveau situé en-dessous de la claie, avec ses poils dirigés vers le haut. Les deux tapis sont suffisamment écartés pour pouvoir passer de part et d'autre de la claie et des fromages qu'elle supporte sans toucher ceux-ci.

Les deux tapis 21 sont alors déplacés parallèlement au plan de la grille 11 selon la flèche F2, jusqu'à être situé l'un 21B en-dessous de la claie et l'autre 21A au-dessus (figure 3).

On soulève alors le tapis inférieur 21B pour décoller les fromages de la grille et simultanément, si nécessaire, on abaisse le tapis supérieur 21A, de manière à enserrer les fromages (flèche F3) sans excès pour ne pas les abîmer (figure 4). Puis on déplace le tapis en sens inverse (flèche F4), en entraînant les fromages, les poils du tapis inférieur 21B s'escamotant au passage des fils transversaux de la grille.

Lorsque les tapis sont entièrement dégagés latéralement de la claie, on fait tourner l'ensemble d'un demi-tour (flèche F5 de la figure 6), les fromages étant maintenus entre les poils des deux tapis, pour amener le tapis 21A en position inférieure et le tapis 21B en position supérieure (figure 7). Puis on déplace l'ensemble en sens inverse (flèche F6, figure 8), le tapis 21A passant sous la grille de la claie, on écarte les tapis (flèches F7, figure 9) de manière que les fromages reposent, retournés, sur la grille, et on retire les tapis en position écartée (figure 10).

Selon une variante, représentée à la figure 25, les poils 23 des tapis, ou autres éléments escamotables, sont disposés obliquement par rapport au support 22.

Dans ce cas, les poils du tapis 21B situé en position inférieure, lors de la phase de retrait des fromages, sont inclinés vers l'arrière par rapport au sens de retrait de manière à faciliter leur repli au passage d'un fil transversal 13 de la grille, et les poils du tapis supérieur sont orientés en sens inverse. De cette manière, les poils du tapis 21A seront orientés favorablement, lors de la remise en place des fromages après retournement, le tapis 21A étant lors en position inférieure, mais déplacé en sens contraire.

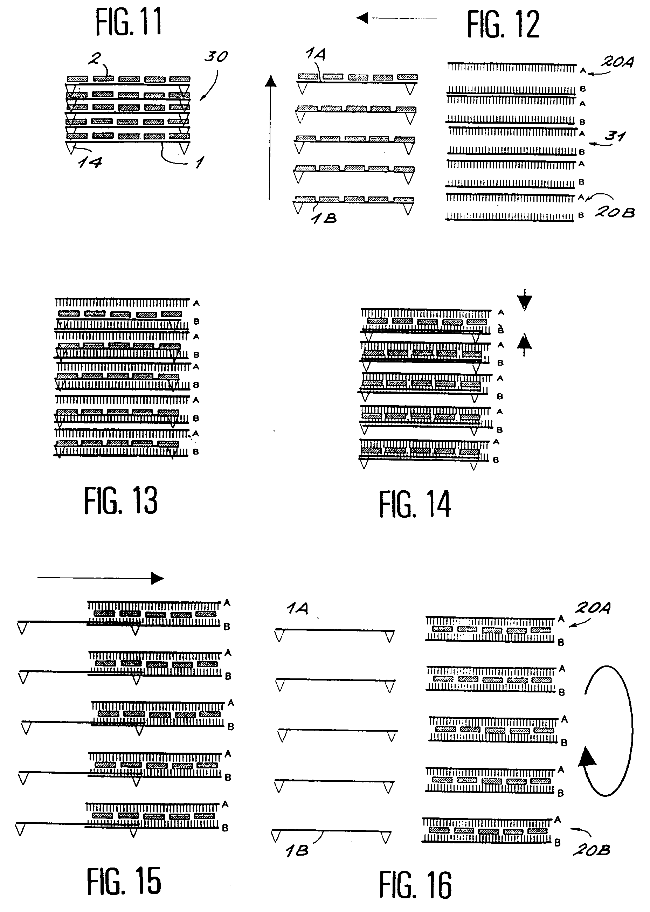

Les figures 11 à 22 représentent les différentes phases du retournement de fromages lorsque ceux-ci sont placés sur des claies empilées, les fromages de toutes les claies étant retournés simultanément.

La figure 11 représente une pile 30 de claies 1 supportant des fromages 2, les pieds 14 de chaque claie s'appuyant sur la claie adjacente inférieure.

La pile de claies est amenée à côté d'un groupe 31 d'ensembles 20 de deux tapis 21, tels que décrits précédemment, comprenant un ensemble supérieur 20A et un ensemble inférieur 20B.

L'espace vertical entre les fromages d'une claie et la grille de la claie supérieure étant généralement faible, une première étape, représentée figure 12, consiste à écarter les claies l'une de l'autre pour permettre le passage des tapis entre les claies.

Les étapes suivantes de retrait des fromages, représentées aux figure 13 à 15, sont réalisées de la même manière que pour le retournement des fromages d'une seule claie, les déplacements verticaux et horizontaux étant réalisés simultanément pour tous les ensembles 20.

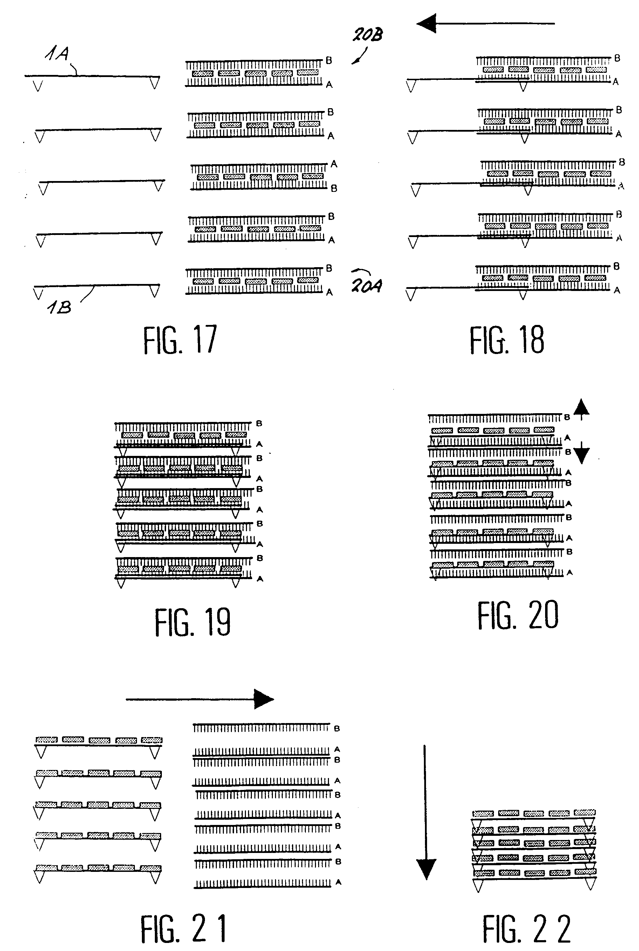

Lorsque le groupe 31 de tapis, maintenant deux à deux entre eux les fromages, est entièrement dégagé des claies (figure 16), on fait tourner d'un demi-tour le groupe complet, selon la flèche de la figure 16, de sorte que l'ensemble 20A se retrouve en position inférieure, et l'ensemble 20B en position supérieure. Ce faisant, les fromages qui se trouvaient sur la claie supérieure 1A de la pile 30, se retrouvent retournés et en face de la claie inférieur 1B. La remise en place des fromages sur les claies est réalisée, de manière similaire à ce qui été décrit précédemment (figure 18 à 21). Lorsque le groupe 31 de tapis est désengagé des claies (figure 21), celles-ci sont rapprochées de manière à reconstituer la pile (figure 22).

Il a déjà été dit que les pieds 14 d'une claie étaient réalisés de manière à s'emboîter sur les pieds d'une autre claie située en-dessous, pour assurer leurs maintien en position dans la pile, et la stabilité de celle-ci. Selon une disposition préférentielle, la hauteur d'encastrement des pieds les uns dans les autres et le déplacement vertical des claies l'une par rapport à l'autre lors de la phase d'écartement sont déterminés de manière à conserver, en position écartée, un guidage des pieds d'une claie quelconque dans ceux de la claie adjacente. Ceci permet notamment de reconstituer la pile sans difficulté après le retournement.

Sur les dessins des figures 26 à 28, on a représenté schématiquement à titre d'exemple une machine de retournement de fromages posés sur une pile de claies.

La machine comprend un bâti fixe 40 délimitant un espace central 41 dans lequel la pile de claie 30 peut être placée. Le bâti 40 porte des moyens 42 de préhension des claies, mobiles horizontalement pour pouvoir s'engager sur les bords des claies après mise en place de la pile dans la machine. Les dits moyens de préhension sont également mobiles verticalement, indépendamment d'une claie à l'autre, pour permettre l'écartement des claies.

La machine comporte par ailleurs un système de retournement 43, situé face au bâti 40, et comprenant plusieurs ensembles 20 superposés (un seul a été représenté sur la figure 37). Chaque tapis est maintenu sur ses bords dans un système de glissière 44 pourvu de moyens de déplacement verticaux 45 pour rapprocher ou éloigner l'un de l'autre les deux tapis de chaque ensemble. Ces systèmes de glissières sont mobiles horizontalement, le déplacement horizontal et simultané de tous les tapis étant commandé par des moyens de translation 46, par exemple un système de transporteur à chaîne ou courroie.

Le système de glissière 44 permet d'engager les tapis 22 entre les claies, comme représenté figure 28, les moyens de déplacement verticaux 45 permettant d'amener les poils des tapis en contact avec les fromages et de soulever ceux-ci des claies.

L'ensemble des moyens de support et de déplacement des tapis est placé dans une couronne 47 annulaire d'axe horizontal, supportée par des galets 48, et entraînée en rotation par un moteur 49, pour faire tourner le dit ensemble d'un demi-tour et ainsi effectuer le retournement des fromages.

L'invention n'est pas limitée aux procédés et dispositifs décrits ci-dessus uniquement à titre d'exemple. En particulier, le retrait des fromages peut être réalisé au moyen d'un seul support, le deuxième support n'étant amené en vis-à-vis pour maintenir les fromages que lorsque le premier est en position dégagée latéralement de la claie et avant d'effectuer le demi-tour à l'ensemble, et seul le deuxième support, qui supporte alors les formages, est utilisé pour les remettre en place.

Il est également possible, dans le cas du retournement de fromages placés sur une pile de claie, de combiner le support servant de support inférieur pour une claie et celui servant d'appui sur les fromages de la claie adjacente inférieure, en un seul support muni d'éléments escamotables sur ses deux faces, tel qu'un tapis double face. Dans ce cas, il peut alors être nécessaire d'assurer simultanément les déplacements verticaux des tapis et des claies, de manière à rapprocher les claies en même temps que l'on rapproche les tapis, pour assurer le maintien correct des fromages, le pas d'espacement des claies devant alors être sensiblement égal au pas d'espacement des tapis lors du retrait ou de la remise en place des fromages.

## Revendications

1. Procédé pour la mise en place de fromage (2) sur une claie (1) en forme de grille (11) s'étendant dans un plan, ou leur retrait de celle-ci, caractérisé en ce qu'on soulève les fromages (2) au moyen d'un support plan (21) horizontal, muni d'une pluralité d'éléments escamotables (23) s'étendant, dans une position érigée, vers le haut perpendiculairement ou obliquement par rapport au support, le support étant situé à un niveau en-dessous de la dite grille (11) et les éléments escamotables s'étendant jusqu'à un niveau au-dessus de la grille, et on déplace le support parallèlement au dit plan, entre une position où le support est en-dessous de la grille et une position ou le support est à côté de celle-ci, les éléments escamotables (23) se rabattant momentanément vers le support lorsqu'ils sont amenés lors du déplacement au contact de la grille, et reprenant leur position érigée lors de la perte de contact, et les fromages étant soutenus en permanence et entraînés par les éléments escamotables érigés.

2. Application du procédé selon la revendication 1 au retournement de fromages, caractérisé en ce qu'on utilise un premier support (21B) pour retirer les fromages (2) de la claie (1), on utilise un deuxième support (21A), en position inversée par rapport au premier support et positionable en regard du premier support pour pouvoir enserrer les fromages entre les deux supports, lorsque ceux-ci sont dégagés latéralement de la claie, on fait faire un demi-tour à l'ensemble (20) des deux supports (21A, 21B), et on réinsère les fromages sur la claie par un déplacement du deuxième support, en sens inverse du retrait.

3. Application du procédé selon la revendication 2 au retournement de fromages disposés sur des claies empilées, caractérisé en ce qu'on utilise un groupe (31) d'ensembles (20) de supports (21A, 21B) superposés, et pour le retournement on fait faire un demi-tour au groupe (31), l'ensemble (20A) de supports supérieur se retrouvant en position inférieure et réciproquement.

4. Dispositif pour la mise en place et/ou le retrait de fromages (2) sur une claie (1) en forme de grille (11) s'étendant dans un plan, comportant des moyens (21) pour supporter les fromages en passant dans les jours de la dite grille, caractérisé en ce que les dits moyens comportent un support (22) plan muni d'une pluralité d'éléments escamotables (23) s'étendant, dans une position érigée dans laquelle ils sont rappelés élastiquement, perpendiculairement ou obliquement par rapport au support, les dits éléments escamotables (23) pouvant se rabattre (23') vers le support lorsqu'ils sont amenés, lors d'un déplacement des supports parallèlement à la grille, au contact d'éléments (13) de celle-ci, s'étendant transversalement à la direction (F1) du déplacement.

5. Dispositif selon la revendication 4, caractérisée en ce que les éléments escamotables sont des poils (23) d'un tapis (21) constituant le dit support.

6. Dispositif selon la revendication 4 ou 5, caractérisée en ce que les éléments escamotables sont liés rigidement au support (22) et sont flexibles en eux-mêmes.

7. Dispositif selon la revendication 4 caractérisé en ce que les éléments escamotables (23'') sont articulés sur le support (22) et rappelés élastiquement dans leur position d'extension.

8. Dispositif selon l'une des revendications 4 à 7, caractérisée en ce que les éléments escamotables sont réalisés en téflon.

9. Machine de retournement de fromages (2) disposés sur des claies (1), caractérisée en ce qu'elle comporte au moins un ensemble (20) de deux supports (21A, 21B) selon l'une des revendications 4 à 8, disposés en sens inverse l'un de l'autre, des moyens (45) pour amener les éléments escamotables des supports en contact avec les fromages et soulever ceux-ci de la claie, des moyens (46) de déplacement des supports parallèlement à la claie entre une position engagée où les supports sont en regard de la claie et une position dégagée où les supports sont à côté de la claie, et des moyens (47, 48) pour faire tourner le dit ensemble d'un demi-tour, dans la dite position dégagée.

10. Machine selon la revendication 9, caractérisée en ce qu'elle comprend un groupe (31) d'ensembles (20) superposés et des moyens (47, 48) pour faire tourner le dit groupe d'un demi-tour.

11. Machine selon la revendication 10, caractérisée en ce qu'elle comporte des moyens (42) pour espacer et rapprocher les claies empilées.

12. Machine selon la revendication 9, caractérisée en ce que les éléments escamotables (23'') des deux supports (21A, 21B) d'un ensemble (20) sont orientés obliquement en sens inverse de la direction de déplacement des supports parallèlement au plan des grilles.

13. Machine selon l'une des revendications 9 à 12, caractérisée en ce que les supports (22) comportent des éléments escamotables sur leurs deux faces, les éléments d'une face soutenant les fromages d'une claie, et les éléments de l'autre face servant d'appui sur les fromages de la claie adjacente inférieure.

## Claims

1. A method for positioning cheese (2) on a tray (1) in the form of a grill (11) extending in a plane, or their removal from the tray, characterised in that the cheeses (2) are lifted by means of a horizontal flat support (21) equipped with a plurality of retractable elements (23) extending, in a raised position, perpendicularly or obliquely upwards relative to the support, the support being located at a level below that of the said grill (11) and the retractable elements extending to a level above the grill, and the support is moved in a parallel direction to the said plane, between a position in which the support is below the grill and a position where the support is beside the grill, the retractable elements (23) folding down temporarily towards the support when they are brought into contact with the grill during their displacement and regaining their raised position after the loss of contact, and the cheeses being permanently supported and carried along by the raised retractable elements.

2. Application of the method according to claim 1 to the turning of cheeses, characterised in that a first support (21B) is used to withdraw the cheeses (2) from the tray (1), a second support (21A), in an inverted position relative to the first support and which can be positioned facing the first support, is used to be able to enclose the cheeses between the two supports when they are removed laterally from the tray, a half-turn is made of the assembly (20) consisting of the two supports (21A, 21B), and the cheeses are reinserted onto the tray by a movement of the second support in the direction opposite to the removal direction.

3. Application of a method according to claim 2 to the turning of cheeses arranged on stacked trays, characterised in that a group (31) of sets (20) of supports (21A, 21B) one above the other is used and for the turning process a half-turn is made of the group (31), the set (20A) of upper supports then being in the lower position and conversely.

4. A device for the placing and/or the removal of cheeses (2) on a tray (1) in the form of a grill (11) extending in a plane, comprising means (21) to support cheeses on passing through the gaps in the said grill, characterised in that the said means comprise a flat support (22) equipped with a plurality of retractable elements (23) extending in a raised position, into which they are returned resiliently, perpendicularly or obliquely relative to the support, the said retractable elements (23) being able to fold down (23') towards the support when they are brought, during a movement of the supports parallel to the grill, into contact with elements (13) of the latter extending transversely to the direction (F1) of the movement.

5. A device according to claim 4, characterised in that the retractable elements are hairs (23) of a mat (21) constituting the said support.

6. A device according to claim 4 or claim 5, characterised in that the retractable elements are rigidly fixed to the support (22) and are themselves flexible.

7. A device according to claim 4, characterised in that the retractable elements (23'') are articulated on the support (22) and are brought back resiliently into their extended position.

8. A device according to any one of claims 4 to 7, characterised in that the retractable elements are made of Teflon.

9. A machine for turning cheeses (2) arranged on trays (1), characterised in that it comprises at least one set (20) of two supports (21A, 21B) in accordance with one of claims 4 to 8, disposed in opposite directions to one another, means (45) to bring the retractable elements of the supports in contact with the cheeses and to lift the cheeses from the tray, means (46) for moving the supports parallel to the tray between an engaged position in which the supports are facing the tray and a disengaged position in which the supports are at the side of the tray, and means (47, 48) for turning the said set through a half-turn in the said disengaged position.

10. A machine according to claim 9, characterised in that it comprises a group (31) of sets (20) above one another and means (47, 48) for turning the said group through a half-turn.

11. A machine according to claim 10, characterised in that it comprises means (42) for moving the stacked trays apart and for bringing them closer together.

12. A machine according to claim 9, characterised in that the retractable elements (23'') of the two supports (21A, 21B) of a set (20) are orientated obliquely in the opposite direction to the direction of movement of the supports parallel to the plane of the grills.

13. A machine according to any one of claims 9 to 12, characterised in that the supports (22) comprise retractable elements on their two faces, the elements of one face supporting the cheeses on one tray and the elements of the other face serving to bear against the cheeses on the adjacent lower tray.

## Patentansprüche

1. Verfahren zum Auflegen von Käsen (2) auf eine Horde (1) in Form eines Rostes (11), der sich in einer Ebene erstreckt, oder zu deren Abheben von diesem, dadurch gekennzeichnet, daß man die Käse (2) mittels eines ebenen, horizontalen Trägers (21) anhebt, der mit einer Mehrzahl von ausschwenkbaren Elementen (23) versehen ist, die sich in einer aufgerichteten Lage senkrecht oder schräg in Bezug auf den Träger nach oben erstrecken, wobei der Träger auf einer Höhe unter dem genannten Rost (11) angeordnet ist und die ausschwenkbaren Elemente sich bis zu einer Höhe über dem Rost erstrecken, und wobei man den Träger parallel zur genannten Ebene zwischen einer Lage, in der sich der Träger unter dem Rost befindet, und einer Lage bewegt, in welcher sich der Träger neben diesem befindet, wobei die ausschwenkbaren Elemente (23) sich kurzzeitig gegen den Träger absenken, wenn sie während ihrer Bewegung in Berührung mit dem Rost gebracht werden, und wieder ihre aufgerichtete Lage während des Berührungsverlustes einnehmen, und die Käse ständig von den aufgerichteten, ausschwenkbaren Elementen untergriffen und mitgenommen werden.

2. Anwendung des Verfahrens nach Anspruch 1 beim Wenden von Käsen, dadurch gekennzeichnet, daß man einen ersten Träger (21B) benutzt, um die Käse (2) von der Horde (1) abzuheben, man einen zweiten Träger (21A) in umgekehrter Lage in Bezug auf den ersten Träger und dem ersten Träger gegenüberliegend anordenbar benutzt, um die Käse zwischen den beiden Trägern einzuklemmen, wenn diese seitlich außer Eingriff mit der Horde gebracht sind, man die Anordnung (20) aus den beiden Trägern (21A, 21B) zu einer halben Umdrehung veranlaßt und man die Käse durch eine Bewegung des zweiten Halters in einer zum Abheben umgekehrten Richtung wieder auf die Horde auflegt.

3. Anwendung des Verfahrens nach Anspruch 2 beim Wenden von Käsen, die auf aufgestapelten Horden angeordnet sind, dadurch gekennzeichnet, daß man eine Gruppe (31) von übereinanderliegenden Anordnungen (20) von Trägern (21A, 21B) benutzt, und daß man für das Wenden eine halbe Umdrehung der Gruppe (31) veranlaßt, wobei sich die obere Anordnung (20A) von Trägern in einer unteren Lage befindet und umgekehrt.

4. Vorrichtung zum Auflegen von Käsen (2) auf eine Horde (1) in Form eines Gitters (11), das sich in einer Ebene erstreckt, und/oder zu deren Abheben, mit Mitteln (21) zum Unterstützen der Käse beim Vorbeilaufen an den Öffnungen des genannten Rostes, dadurch gekennzeichnet, daß die genannten Mittel einen ebenen Träger (22) aufweisen, der mit einer Mehrzahl von ausschwenkbaren Elementen (23) versehen ist, die sich in einer aufgerichteten Lage, in die sie elastisch verbracht sind, senkrecht oder schräg in Bezug auf den Träger erstrecken, wobei die genannten ausschwenkbaren Elemente (23) gegen den Träger umklappen (23') können, wenn sie während einer Bewegung des Trägers parallel zum Rost in Berührung mit dessen Elementen (13) gelangen, wobei sie sich quer zur Richtung (F1) der Bewegung erstrecken.

5. Vorrichtung nach Anspruch 4, dadurch gekennzeichnet, daß die ausschwenkbaren Elemente Borsten (23) einer Matte (21) sind, die den genannten Träger bildet.

6. Vorrichtung nach Anspruch 4 oder 5, dadurch gekennzeichnet, daß die ausschwenkbaren Elemente starr mit dem Träger (22) verbunden sind und in sich selbst flexibel sind.

7. Vorrichtung nach Anspruch 4, dadurch gekennzeichnet, daß die ausschwenkbaren Elemente (23'') gelenkig auf dem Träger (22) angebracht sind und elastisch in ihre Ausfahrlage zurückgebracht sind.

8. Vorrichtung nach einem der Ansprüche 4 bis 7, dadurch gekennzeichnet, daß die ausschwenkbaren Elemente aus Teflon hergestellt sind.

9. Maschine zum Wenden von Käsen (2), die auf Horden (1) angeordnet sind, dadurch gekennzeichnet, daß sie mindestens eine Anordnung (20) aus zwei Trägern (21A, 21B) gemäß einem der Ansprüche 4 bis 8 aufweisen, die zueinander in umgekehrter Richtung angeordnet sind, Mittel (45), um die ausschwenkbaren Elemente des Trägers in Berührung mit den Käsen zu bringen und diese von der Horde abzuheben, Mittel (46) zum Verlagern der Träger parallel zur Horde zwischen einer Eingriffslage, in der die Träger der Horde gegenüberliegen, und einer eingriffsfreien Lage, in der sich die Träger neben der Horde befinden, sowie Mittel (47, 48), um sich die genannte Anordnung in der genannten, eingriffsfreien Lage um eine halbe Umdrehung drehen zu lassen.

10. Maschine nach Anspruch 9, dadurch gekennzeichnet, daß sie eine Gruppe (31) von übereinanderliegenden Anordnungen (20) aufweist, sowie Mittel (47, 48), um die genannte Gruppe sich um eine halbe Umdrehung drehen zu lassen.

11. Maschine nach Anspruch 10, dadurch gekennzeichnet, daß sie Mittel (42) aufweist, um die gestapelten Horden auf Abstand zu bringen und aneinander anzunähern.

12. Maschine nach Anspruch 9, dadurch gekennzeichnet, daß die ausschwenkbaren Elemente (23'') der beiden Träger (21A, 21B) einer Anordnung (20) in einer Richtung umgekehrt zur Richtung der Bewegung der Träger parallel zur Ebene der Roste schräg ausgerichtet sind.

13. Maschine nach einem der Ansprüche 9 bis 12, dadurch gekennzeichnet, daß die Träger (22) ausschwenkbare Elemente auf ihren beiden Flächen aufweisen, wobei die Elemente der einen Fläche die Käse der einen Horde untergreifen und die Elemente der anderen Fläche zur Anlage auf den Käsen der nächsttieferen Horde dienen.
